Europäisches Patentamt

European Patent Office

Office européen des brevets

(11) Veröffentlichungsnummer: **0 309 716**
**A2**

(12) **EUROPÄISCHE PATENTANMELDUNG**

(21) Anmeldenummer: 88113371.4

(51) Int. Cl.⁴: **B29B 13/02**

(22) Anmeldetag: 17.08.88

(30) Priorität: 30.09.87 DE 3733029

(43) Veröffentlichungstag der Anmeldung:
05.04.89 Patentblatt 89/14

(84) Benannte Vertragsstaaten:
AT BE CH DE ES FR GB GR IT LI LU NL SE

(71) Anmelder: **Claassen, Henning J.**
**Industriegebiet Hafen**
**D-2120 Lüneburg(DE)**

(72) Erfinder: **Claassen, Henning J.**
**Industriegebiet Hafen**
**D-2120 Lüneburg(DE)**

(74) Vertreter: **Dipl.-Ing. Schwabe, Dr. Dr.**
**Sandmair, Dr. Marx**
**Stuntzstrasse 16**
**D-8000 München 80(DE)**

(54) Vorrichtung zum Verflüssigen eines hochpolymeren, thermoplastischen Werkstoffes.

(57) Eine Vorrichtung zum Verflüssigen eines hochpolymeren, thermoplastischen Werkstoffes, insbesondere eines Schmelzklebers, in einem Transportbehälter weist eine Halterung für den Transportbehälter, dessen Entnahmeöffnung nach unten gerichtet ist, eine Heizeinrichtung für die Erwärmung und damit Verflüssigung des Werkstoffes im Bereich der Entnahmeöffnung des Transportbehälters sowie eine unter dem Transportbehälter angeordnete Fördereinrichtung für den auslaufenden Werkstoff auf. Um den kontinuierlichen Betrieb auch bei einem Wechsel des Transportbehälters zu gewährleisten, wird entweder unter dem Transportbehälter ein Auffangbehälter mit variablem Volumen angeordnet, der den auslaufenden Werkstoff aufnimmt und der Fördereinrichtung zuführt, oder es werden parallel zueinander mindestens zwei Transportbehälter vorgesehen, denen bei normalem Betrieb die Strömung des hochpolymeren Werkstoffes mit einer Aufteilung von mindestens 2:1 entnommen wird.

Bei Verwendung eines Auffangbehälters dient dieser als Puffer-Volumen, so daß beim Auswechseln des Transportbehälters die Fördereinrichtung aus dem Auffangbehälter gespeist wird.

Bei Verwendung von zwei Transportbehälter wird der entleerte Transportbehälter abgeschaltet, so daß während seiner Auswechslung die ganze Werkstoff-Strömung von dem anderen Transportbehälter bezogen wird.

Fig. 1

## Vorrichtung zum Verflüssigen eines hochpolymeren, thermoplastischen Werkstoffes

Die Erfindung betrifft eine Vorrichtung zum Verflüssigen eines hochpolymeren, thermoplastischen Werkstoffes, insbesondere eines Schmelzklebers, der im Oberbegriff der Ansprüche 1 und 8 angegebenen Gattung.

Schlecht fließende, hochviskose, thermoplastische Werkstoffe, nämlich hochviskose Dichtungsmassen, Butylen sowie Haftschmelzkleber, insbesondere Schmelzkleber auf der Basis von Polyurethan, können in sogenannten "Faßschmelzern" verflüssigt werden, also Heizeinrichtungen, die in den geöffneten Transportbehälter für einen solchen thermoplastischen Werkstoff eingeführt werden und die hochviskose Masse erwärmen, so daß sie fließfähig wird und nach unten aus dem Transportbehälter herausläuft.

Mit einem solchen Faßschmelzer lassen sich jedoch keine thermoplastischen Werkstoffe verarbeiten, die sehr empfindlich mit dem in der Luft vorhandenen Sauerstoff reagieren und insbesondere aushärten. Dies gilt im extremen Maße für Klebstoffe auf der Basis von Polyurethan, so daß die aus der DE-PS 36 00 020 bekannte Verflüssigungsvorrichtung entwickelt wurde, bei der der nach unten offene Transportbehälter in dem oberen Teil eines beheizbaren, abgedichteten Vorratsbehälters angeordnet wird; unter dem Transportbehälter befindet sich der untere, als Puffervolumen dienende Teil des Vorratsbehälters, so daß während der gesamten Verflüssigung des hochpolymeren Werkstoffes in dem Transportbehälter eine Abschirmung gegen die Umgebungseinflüsse durch den Vorratsbehälter und gegebenenfalls noch durch zusätzliche Einführung eines Schutzgases erfolgt.

Während bei der Verflüssigungsvorrichtung nach der DE-PS 36 00 020 der gesamte Transportbehälter gleichmäßig erwärmt und dadurch die gesamte, in dem Transportbehälter befindliche Menge an hochpolymeren Werkstoff nahezu gleichzeitig verflüssigt wird, gibt es auch Ausführungsformen, bei denen der Transportbehälter langsam von unten her erwärmt und gleichzeitig der verflüssigte Werkstoff mittels eines sogenannten "Kratzkolbens" von oben her aus dem Transportbehälter herausgedrückt wird und nach unten in eine beheizte Kammer fällt, von der er mittels einer Fördereinrichtung der weiteren Verarbeitung zugeführt wird.

Bei einer solchen Verflüssigungsvorrichtung treten jedoch Probleme beim Wechsel des Transportbehälters auf, da hierbei die weitere Verarbeitung des verflüssigten hochpolymeren Werkstoffes unterbrochen werden muß. Dadurch kommt es jedoch zu starken, unerwünschten Qualitätsschwankungen im Verlaufe der weiteren Verarbeitung; als Beispiel soll das Auftragen eines verflüssigten Schmelzklebers auf eine textile Unterlage genannt werden: Wird hierbei der Auftrag unterbrochen und nach dem Auswechseln des Transportbehälters neu gestartet, so ergibt sich entweder eine Lücke auf der im allgemeinen kontinuierlichen Auftragsstrecke oder aber es muß gleichzeitig auch der Transport des zu beschichtenden Substrates an der Auftragvorrichtung vorbei unterbrochen werden, wodurch praktisch die gesamte Anlage zum Stillstand kommt.

Bei der Verflüssigungsvorrichtung nach der DE-PS 36 00 020 ist der Vorratsbehälter so ausgelegt, daß der gesamte Inhalt des Transportbehälters in dem unteren, als Puffer-Volumen dienenden Teil des Vorratsbehälters aufgenommen wird, so daß der Transportbehälter nach seiner Entleerung ausgetauscht werden kann. Für viele Anwendungsfälle ist jedoch die vollständige Abschirmung des verflüssigten, hochpolymeren Werkstoffes und damit seines Transportbehälters in einem abgedichteten Vorratsbehälter, eventuell noch unter einem Schutzgas, nicht erforderlich, so daß die Lösung nach der DE-PS 36 00 020 zu aufwendig wird.

Der Erfindung liegt deshalb die Aufgabe zugrunde, eine Verflüssigungsvorrichtung der angegebenen Gattung zu schaffen, bei der die oben erwähnten Nachteile nicht auftreten.

Insbesondere soll eine Verflüssigungsvorrichtung vorgeschlagen werden, die auch ohne Verwendung eines abgedichteten, den Transportbehälter für den hochpolymeren Werkstoff aufnehmenden Vorratsbehälters die kontinuierliche Belieferung mit verflüssigtem hochpolymeren Werkstoff gewährleistet.

Dies wird erfindungsgemäß durch die in den kennzeichnenden Teilen der Ansprüche 1 und 8 angegebenen Merkmale erreicht.

Zweckmäßige Ausführungsformen werden durch die Merkmale der Unteransprüche definiert.

Nach einem ersten Aspekt der Erfindung läuft der verflüssigte, hochpolymere Werkstoff aus dem Transportbehälter nach unten in einen Auffangbehälter mit variablem Volumen, der als eine Art Puffer dient und eine Menge an verflüssigtem Werkstoff aufnehmen kann, die während des Auswechseln des Transportbehälters den kontinuierlichen Betrieb der Verflüssigungsvorrichtung gewährleistet, so daß in dieser Zeitspanne, in der ansich kein neuer, verflüssigter Werkstoff zugeführt wird, die Verarbeitungseinrichtung, bspw. eine Auftragsvorrichtung oder ein Sprühkopf, den verflüssigten Werkstoff aus dem Auffangbehälter empfängt.

Während des Auffüllens des Auffangbehälters vergrößert sich sein Volumen, bis die maximale Größe erreicht wird; anschließend, nämlich während des Auswechselns des Transportbehälters, wird das Volumen des Auffangbehälters wieder verkleinert, so daß der verflüssigte Werkstoff "ausgedrückt" und der weiteren Verarbeitung zugeführt wird.

Zur Änderung des Volumens des Auffangbehälters stehen verschiedene konstruktive Lösungen zur Verfügung. Beispielsweise kann der Auffangbehälter durch eine zylindrische oder quaderförmige Kammer gebildet werden, deren Stirnseiten durch bewegliche Kolben verschlossen werden. Durch eine entsprechende Verschiebung der Kolben läßt sich die gewünschte Vergrößerung bzw. Verkleinerung des Volumens der Kammer erreichen.

Als Alternative hierzu ist es auch möglich, den Auffangbehälter als Federbalg auszubilden, dessen Stirnseiten ebenfalls durch Kolben beaufschlagt werden, um das Volumen des Federbalges und damit des Auffangbehälters zu verändern.

Die Kolben werden zweckmäßigerweise hydraulisch, pneumatisch oder durch Federkräfte beaufschlagt, so daß sich eine elastische Verformung des Volumens des Auffangbehälters ergibt und dadurch auch unterschiedliche Maximal-Volumina aufgenommen werden können.

Nach einem weiteren Aspekt der Erfindung werden mindestens zwei Verflüssigungsvorrichtungen in der Weise parallel zueinander geschaltet, daß beide ständig in Betrieb sind und damit verflüssigten Werkstoff für die weitere Verarbeitung liefern. Dabei sind die Strömungsmengen so abgestuft, daß der überweigende Teil der Strömung von einem bestimmten Transportbehälter geliefert wird, während der Beitrag des bzw. der anderen Transportbehälter(s) relativ klein ist. Werden bspw. zwei Transportbehälter gleichzeitig eingesetzt, so könnte das Strömungsverhältnis 90:10 betragen.

Die Füllstände der beiden Transportbehälter werden ständig überwacht; ist der Transportbehälter, dem die größere Werkstoffmenge entnommen wird, leer, so wird die entsprechende Verflüssigungsvorrichtung abgeschaltet und im folgenden der verflüssigte Werkstoff nur noch dem anderen Transportbehälter entnommen, so daß der erste Transportbehälter ausgewechselt werden kann.

Hat die Verflüssigungsvorrichtung mit dem neuen Transportbehälter wieder ihre Betriebstemperatur erreicht, so daß auch dieser Verflüssigungsvorrichtung der erwärmte und damit flüssige Werkstoff abgenommen werden kann, so wird die Entnahmeströmung wieder auf das Verhältnis 90:10, diesmal jedoch zugunsten des zweiten Transportbehälters, eingestellt, so daß nun wieder beide Transportbehälter den verflüssigten Werkstoff liefern, bis auch der zweite Transportbehälter entleert ist.

Dann beginnt der Zyklus, ausgehend von dem zweiten Transportbehälter, von neuem.

Diese Ausführungsform hat den Vorteil, daß man einen größeren Variationsbereich für die erzeugte Menge an verflüssigtem Werkstoff enthält, da in Sonder-Fällen beide Transportbehälter etwa gleiche Werkstoff-Mengen liefern können, wodurch sich kurzfristig auch extreme Verbrauchs-Engpässe überbrücken lassen.

In jedem Fall ist jedoch der kontinuierliche Betrieb ohne Unterbrechung beim Auswechseln eines Transportbehälters möglich.

Die Erfindung wird im folgenden anhand von Ausführungsbeispielen unter Bezugnahme auf die beiliegenden, schematischen Zeichnungen näher erläutert. Es zeigen

Fig. 1 einen senkrechten Schnitt durch eine erste Ausführungsform einer Vorrichtung zum Verflüssigen von Schmelzklebern, und

Fig. 2 eine Darstellung einer Modifikation dieser Ausführungsform, und

Fig. 3 einen vertikalen Schnitt durch eine zweite Ausführungsform einer Vorrichtung zum Verflüssigen von Schmelzklebern.

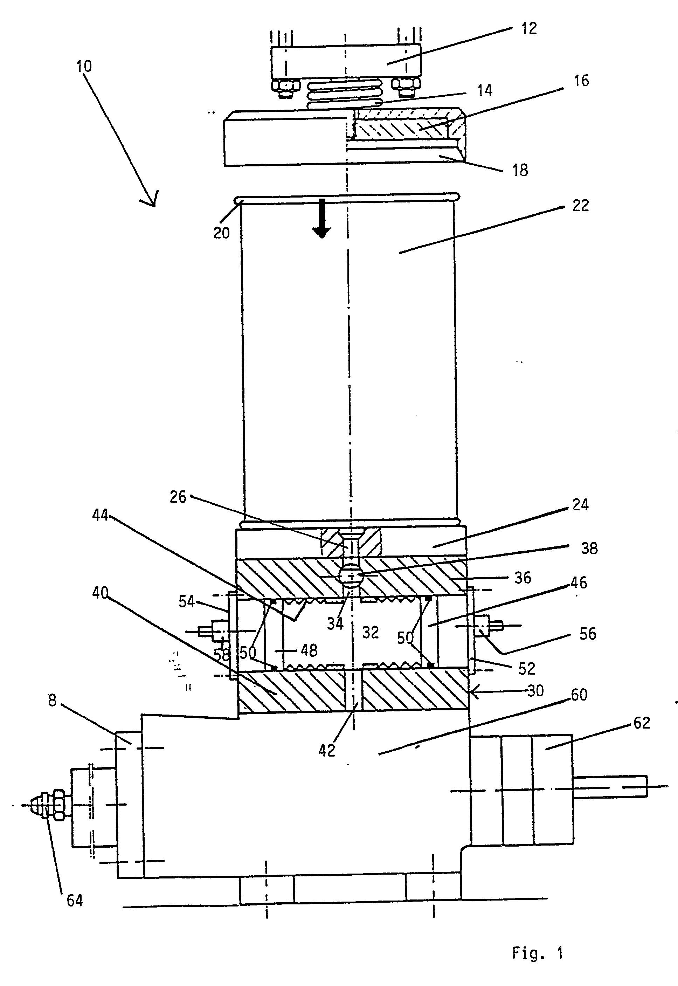

Die aus Figur 1 ersichtliche, allgemein durch das Bezugszeichen 10 angedeutete Vorrichtung zum Verflüssigen von Schmelzklebern, insbesondere auf der Basis von Polyurethan, weist einen lotrecht verschiebbaren Hub-Zylinder 12 auf, der über eine Wendelfeder 14 mit einem Druckkolben 16 verbunden ist. An seinem unteren Ende ist der Druckkolben 16 mit einer scheibenförmigen Aussparung 18 ausgebildet, deren Außenkanten abgeschrägt und an die Form des beweglichen Bodens 20 eines Transportbehälters 22 für den Schmelzkleber angepaßt ist. Der Boden 20 ist als sogenannter "Kratzkolben" ausgebildet und kann in Richtung des Pfeils von Figur 1 in dem Transportbehälter 22 nach unten bewegt werden.

Das gemäß der Darstellung in Figur 1 untere, üblicherweise mit einem Deckel versehene Ende des Transportbehälters 22 ist geöffnet, so daß nach unten hin die Oberfläche des in aller Regel festen, zumindest sehr zähflüssigen Schmelzklebers frei liegt, der jedoch wegen seiner Konsistenz noch nicht austreten kann.

Das untere Ende des Transportbehälters 22 liegt auf einer Heizplatte 24 auf, die in ihrer Mitte eine zentrale Durchflußöffnung 26 für den verflüssigten Schmelzkleber aufweist.

Lotrecht unter der Heizplatte ist ein Auffangbehälter 30 mit variablem Volumen angeordnet, dessen als Puffer-Volumen dienende Kammer 32 über eine zentrale Öffnung 34 in der oberen Wand 36 des Auffangbehälters 30 mit der Öffnung 26 verbunden ist. In der Öffnung 36 befindet sich ein Absperrorgan, wodurch sich der Auffangbehälter 30 von dem verflüssigten Schmelzkleber in dem Transportbehälter 22 trennen läßt, wie es bspw. beim Auswechseln des Transportbehälters 22 erforderlich ist.

Nach unten wird der Auffangbehälter 30 durch eine Platte 40 abgeschlossen, die ebenfalls mit einer zentralen Ausflußöffnung 42 versehen ist.

Die Form der Heizplatte 24 und der beiden Platten 36, 40 ist an die Form des Transportbehälters 22 angepaßt, d.h. hat der Transportbehälter 22 die übliche, zylindrische Dosenform, so haben die Platten 24, 36 und 40 Scheibenform.

Die beiden Platten 36, 40 des Auffangbehälters 30 sind ortsfest angeordnet, und zwar ebenso wie die bei der Darstellung nach Figur 1 nicht sichtbaren, vorderen und hinteren Seitenwände des Auffangbehälters 30.

Die gemäß der Darstellung in Figur linken und rechten Seiten des Auffangbehälters 30 sind jedoch beweglich, so daß sich das Volumen der Kammer 32 des Auffangbehälters 30 verändern läßt.

Zu diesem Zweck ist bei der Ausführungsform nach Figur 1 zwischen den beiden Platten 36, 40 ein Federbalg 44 angeordnet, der an seinen beiden Stirnflächen mit Kolben 46, 48 versehen ist. Zur Abdichtung der Berührungsbereiche zwischen den Kolben 46, 48 und den Platten 36, 40 dienen Dichtungen 50.

Der Raum zwischen den beiden Platten 36, 40 des Auffangbehälters 30 ist an den Stirnseiten durch Platten 52, 54 verschlossen, die über die in Figur 1 angedeuteten Anschlüsse 56, 58 mit Druckluft beaufschlagbar sind, so daß die Kolben 48, 50 pneumatisch in der Kammer 32 nach innen verschoben werden können.

Unter der unteren Platte 40 des Auffangbehälters 30 befindet sich eine weitere, beheizte Kammer 60, die über eine Öffnung 42 in der Platte 40 und dem Federbalg 44 mit der Kammer 32 in Verbindung steht und aus der der verflüssigte Schmelzkleber mittels einer Förderpumpe 62 durch einen Auslaß 64 abtransportiert und der weiteren Verarbeitung zugeführt wird.

Beim Betrieb einer solchen Verflüssigungsvorrichtung 10 wird zunächst das untere, offene Ende des Transportbehälters 22 auf die beheizte Platte 24 und dann der Kolben 16 so auf das geschlossene, obere Ende des Transportbehälters 22 aufgesetzt, daß sich der bewegliche Boden 22 in der Aussparung 18 befindet. Durch die Lagerung des Kolbens 16 über die Wendelfeder 14 an dem Hubzylinder 12, die Schwenkbewegungen des Kolbens 16 ermöglicht, kann der Kolben 16 auch auf schrägstehende Transportbehälter 22 aufgesetzt werden.

Nun wird der untere Teil des Transportbehälters 22 mit dem Schmelzkleber von der Heizplatte 24 erwärmt und gleichzeitig der bewegliche Boden 20 durch den Hubzylinder 12 lotrecht nach unten geschoben, so daß der erwärmte und damit verflüssigte Schmelzkleber über die Öffnungen 26, 34 in die Kammer 32 des Auffangbehälters 30 gedrückt wird. Die Menge des nach unten über die Öffnung 42 aus der Kammer 32 austretenden Schmelzklebers hängt unter anderem von der Verarbeitungsgeschwindigkeit ab, so daß die Kolben 46, 48 nach außen verschoben werden, wenn die Kammer 32 von oben eine größere Schmelzkleber-Menge empfängt, als sie nach unten durch die Förderpumpe 62 abtransportiert wird.

Ist der Transportbehälter 22 vollständig entleert worden, so hat die Kammer 32 ein entsprechendes Volumen erreicht, das für die Belieferung der Auftragsvorrichtung (nicht dargestellt) während der nun folgenden Unterbrechung der Zufuhr aus dem Transportbehälter 22 dient. Dann wird das Absperrorgan 38 geschlossen und damit die Verbindung zwischen dem Transportbehälter 22 und dem Auffangbehälter 30 unterbrochen.

Im folgenden erfolgt die Belieferung der Förderpumpe 62 bzw. der Auftragvorrichtung (nicht dargestellt) aus dem Schmelzkleber in der Kammer 32, wobei der erforderliche Förderdruck dadurch erzeugt wird, daß die Anschlüsse 56, 58 pneumatisch beaufschlagt werden und dadurch die Kolben 46, 48 nach innen schieben, wodurch sich das Volumen des Federbalges 44 verkleinert und der verflüssigte Schmelzkleber in dem Auffangbehälter 30 durch die Öffnung 42 nach unten austritt.

Parallel hierzu wird der Hubzylinder 12 nach oben gefahren, der leere Transportbehälter 22 gegen einen vollen Transportbehälter ausgetauscht und dann wieder der Zylinder 16 aufgesetzt. Wird nun das Absperrorgan 38 wieder geöffnet und der Transportbehälter 22 mittels der Heizplatte 24 wieder erwärmt, so kann dem Auffangbehälter 30 wieder verflüssigter Schmelzkleber aus dem Transportbehälter 22 zugeführt und dadurch der kontinuierliche Betrieb gewährleistet werden.

Als Alternative zu der dargestellten Ausführungsform lassen sich die stirnseitigen Kolben 46, 48 des Federbalges 44 auch direkt mechanisch beaufschlagen oder dadurch verschieben, bspw. über eine Feder, aber auch durch eine Hubstange.

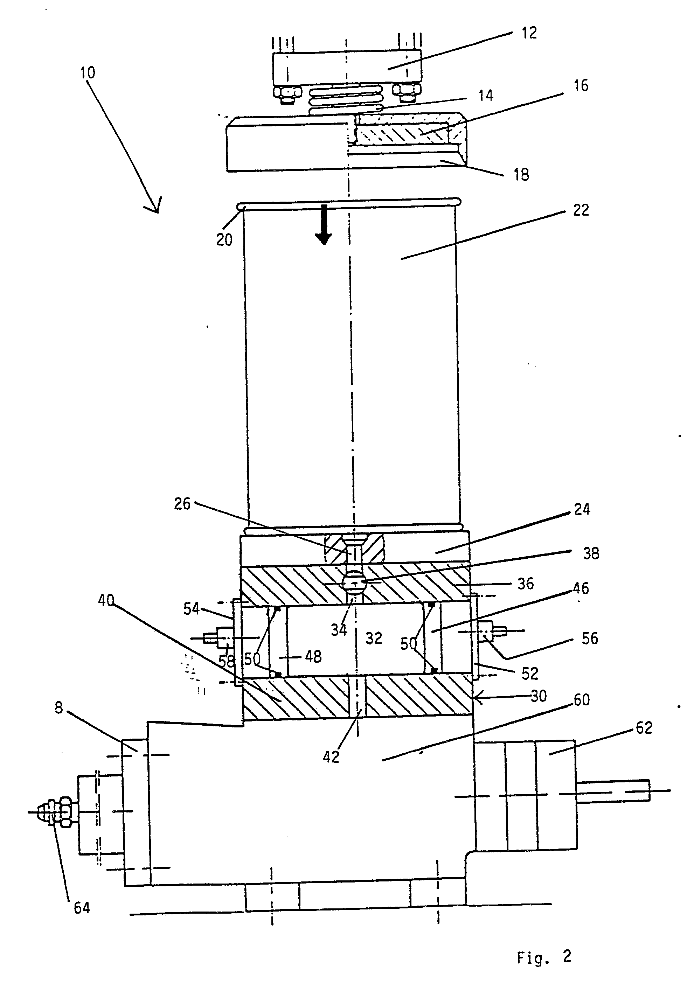

Figur 2 zeigt eine Modifikation der Ausführungsform der Verflüssigungsvorrichtung 10 nach Figur 1, bei der kein Federbalg 44 vorgesehen ist. Stattdessen wird an den beiden Stirnseiten die Kammer 32 nur durch die Kolben 46, 48 verschlossen, die in gleicher Weise wie bei der Ausführungsform nach Figur 1 pneumatisch verschiebbar sind.

Die oberen und unteren Wände der Kammer 32 werden durch die Platten 36, 40 gebildet. Da die Kammer 32, anders als bei der Ausführungsform nach Figur 1, nicht von allen Seiten durch den Federbalg 44 umgeben ist, muß bei der Ausführungsform nach Fig. 2 besondere Sorgfalt auf die Abdichtung zwischen den Kolben 46, 48 und den Platten 36, 40 gerichtet werden.

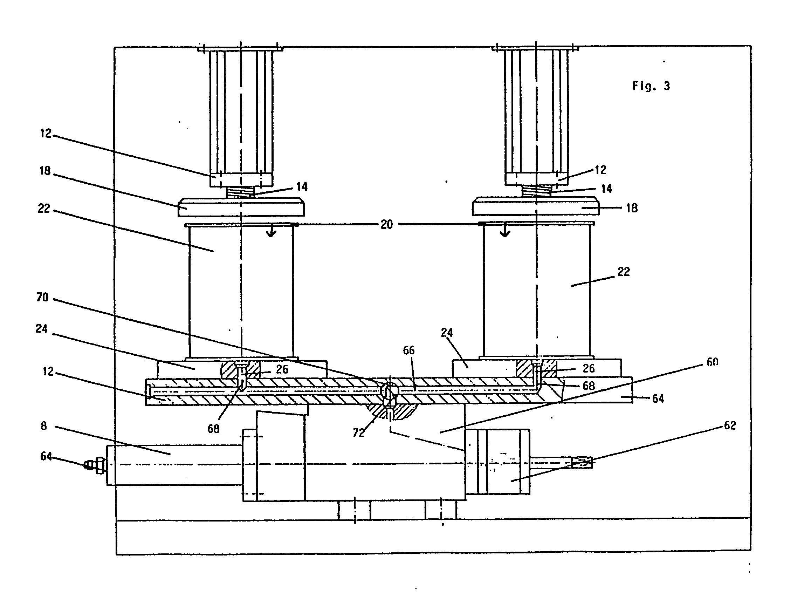

Figur 3 zeigt einen zweiten Aspekt der Erfindung, wobei zwei Transportbehälter 22 parallel nebeneinander angeordnet und jeweils mit den zugehörigen, in Figur 1 und 2 dargestellten Komponenten versehen sind, also mit den Hubzylindern 12, den Wendelfedern 14, den Kolben 18 und den Heizplatten 24 mit den Ausflußöffnungen 26.

Auch der Weitertransport des verflüssigten Schmelzklebers erfolgt bei dieser Ausführungsform auf die aus den Figuren 1 und 2 ersichtliche Weise, nämlich mittels einer beheizten Kammer 60, aus der der verflüssigte Schmelzkleber über eine Förderpumpe 62 dem Auslaß 64 zugeführt wird.

Zwischen den beiden Heizplatten 24 einerseits und der beheizten Kammer 60 ist eine weitere, beheizte Platte 66 vorgesehen, die einen waagerechten Kanal 66 mit nach oben gerichteten Mündungen 68 aufweist; die beiden Mündungen 68 fluchten mit den Durchflußöffnungen 26 in den Heizplatten 24.

Etwa in der Mitte zwischen den beiden Transportbehältern 22 ist in dem Strömungskanal 66 ein Absperr- und Umstellventil 70 angeordnet, das als Dreiwege-Ventil ausgebildet ist und die beiden Zweige des Strömungskanals 66, die zu den beiden Mündungen 68 führen, mit einer Zuflußöffnung 72 für die beheizte Kammer 60 verbinden kann.

Bei dieser Ausführungsform werden die beiden Transportbehälter 22 in der gleichen Weise, wie es für Figur 1 erläutert wurde, in die Verflüssigungsvorrichtung eingesetzt und erwärmt, so daß der erwärmte und damit verflüssigte Schmelzkleber nach unten aus den Öffnungen 26 aus und in den Strömungskanal 66 eintreten kann. Das Ventil 70 ist dabei bspw. so eingestellt, daß 90 % des Schmelzklebers aus dem linken Transportbehälter 22 und nur etwa 10 % des erwärmten und damit verflüssigten Schmelzklebers aus dem rechten Transportbehälter 22 bezogen und mittels der Förderpumpe 62 der weiteren Verarbeitung zugeführt werden.

Ist nun der linke Transportbehälter 22, dem die größere Schmelzkleber-Menge entnommen worden ist, leer, was man aus der Lage seines Bodens 20 und/oder des Kolbens 18 ableiten kann, so wird das Ventil 70 in die aus Figur ersichtliche Lage gebracht, bei der der linke Zweig des Strömungskanals 66 versperrt und der Schmelzkleber nur noch dem rechten Transportbehälter 22 entnommen wird. Eine Änderung in der Strömung beim Umstellen des Ventils 70 macht sich, auch wegen der Pufferwirkung der heizbaren Kammer 66, bei der weiteren Verarbeitung des Schmelzklebers nicht bemerkbar.

Im folgenden wird der Schmelzkleber nur noch dem rechten Transportbehälter 22 entnommen, so daß in der Zwischenzeit der linke Transportbehälter 22 auf die erläuterte Weise ausgewechselt und gegen einen vollen Transportbehälter 22 ausgetauscht werden kann.

Hat der linke Transportbehälter 22 wieder seine Betriebstemperatur und seinen Betriebzustand erreicht, so wird das Absperr- und Umstellventil 70 wieder umgestellt, und zwar nun in der Weise, daß etwa 90 % des zu verarbeitenden Schmelzklebers dem rechten Transportbehälter 22 und nur etwa 10 % dem linken Transportbehälter 22 entnommen werden.

Ist auch der rechte Transportbehälter 22 entleert, so beginnt der Zyklus von neuem, und zwar diesmal ausgehend von dem linken Transportbehälter 22, der während des Auswechselns des rechten Transportbehälters 22 die gesamte Schmelzkleber-Menge zur Verfügung stellt.

Bei Bedarf kann bei der Ausführungsform nach Figur 3 noch eine zusätzliche Anzeige für den Füllstand des Schmelzklebers in den beiden Transportbehältern 22 vorgesehen werden.

## Ansprüche

1. Vorrichtung zum Verflüssigen eines hochpolymeren, thermoplastischen Werkstoffes, insbesondere eines Schmelzklebers, in einem Transportbehälter

a) mit einer Halterung für den Transportbehälter, dessen Entnahmeöffnung nach unten gerichtet ist,

b) mit einer Heizeinrichtung für die Erwärmung und damit Verflüssigung des Werkstoffes im Bereich der Entnahmeöffnung des Transportbehälters, und

c) mit einer unter dem Transportbehälter angeordneten Fördereinrichtung für den auslaufenden Werkstoff,

**dadurch gekennzeichnet**, daß

d) unter dem Transportbehälter (22) ein Auffangbehälter (30) mit variablem Volumen vorgesehen ist,

e) der den auslaufenden Werkstoff aufnimmt und der Fördereinrichtung (62) zuführt.

2. Vorrichtung nach Anspruch 1, dadurch gekennzeichnet, daß der Auffangbehälter (30) zwei lotrecht übereinander angeordnete, zwischen sich eine Kammer (32) bildende Platten (36, 40) aufweist, und daß mindestens zwei einander gegenüberliegende Seitenwände (46, 48) der Kammer (32) beweglich angeordnet sind.

3. Vorrichtung nach Anspruch 1, dadurch gekennzeichnet, daß der Auffangbehälter (30) einen Federbalg (44) mit beweglich gelagerten Seitenwänden (46, 48) aufweist.

4. Vorrichtung nach einem der Ansprüche 2 oder 3, dadurch gekennzeichnet, daß an den beweglichen Seitenwänden (46, 48) Dichtungen (50) vorgesehen sind.

5. Vorrichtung nach einem der Ansprüche 2 bis 4, dadurch gekennzeichnet, daß die beweglichen Seitenwände (46, 48) durch äußere Kräfte mechanisch verstellbar sind.

6. Vorrichtung nach Anspruch 5, dadurch gekennzeichnet, daß die Seitenwände (46, 48) pneumatisch beaufschlagbar sind.

7. Vorrichtung nach einem der Ansprüche 1 bis 6, dadurch gekennzeichnet, daß zwischen dem Auffangbehälter (30) und dem unteren Ende des Transportbehälters (22) eine Heizplatte (24) angeordnet ist, auf der der Transportbehälter (22) aufliegt.

8. Vorrichtung zum Verflüssigen eines hochpolymeren, thermoplastischen Werkstoffes, insbesondere eines Schmelzklebers, in einem Transportbehälter

　　a) mit einer Halterung für den Transportbehälter, dessen Entnahmeöffnung nach unten gerichtet ist,

　　b) mit einer Heizeinrichtung für die Erwärmung und damit Verflüssigung des Werkstoffes im Bereich der Entnahmeöffnung des Transportbehälters, und

　　c) mit einer unter dem Transportbehälter angeordneten Fördereinrichtung für den auslaufenden Werkstoff, dadurch gekennzeichnet, daß mindestens zwei Halterungen (12, 14, 16, 18, 24) für jeweils einen Transportbehälter (22) vorgesehen sind, und daß

　　d) eine Absperr- und Umstellventilanordnung (70) die von den bzw. allen Transportbehältern (22) mit einer Aufteilung von mindestens 2:1 kommende Strömung des hochpolymeren Werkstoffes der Fördereinrichtung (62) zuleitet.

9. Vorrichtung nach Anspruch 8, dadurch gekennzeichnet, daß ein gemeinsamer Strömungskanal (66) vorgesehen ist, der an beide bzw. alle Transportbehälter (22) angeschlossen ist, und daß sich die Absperr- und Umstellventilanordnung (70) in dem Strömungskanal (66) befindet.

10. Vorrichtung nach einem der Ansprüche 8 und 9, dadurch gekennzeichnet, daß die Absperr- und Umstellventilanordnung (70) bei normalem Betrieb die Strömung etwa im Verhältnis 90:10 aufteilt.

11. Vorrichtung nach einem der Ansprüche 8 bis 10, dadurch gekennzeichnet, daß eine Füllstands-Anzeige für jeden Transportbehälter (22) vorgesehen ist.

Fig. 1

Fig. 2

Fig. 3

EP 0 309 716 A2